# EUROPEAN PATENT SPECIFICATION

(11) **EP 1 608 505 B1**
(45) Date of publication and mention of the grant of the patent: **18.07.2012**
(21) Application number: 04721223.8
(22) Date of filing: 17.03.2004
(51) Int. Cl.: B32B 27/12, C09J 7/04, C09J 183/04, A41B 11/12

(54) **AN ADHESIVE FABRIC**
KLEBSTOFF BESCHICHTETES GEWEBEMATERIAL
TISSU ADHESIF

(30) Priority: 18.03.2003 GB 0306131; 15.07.2003 GB 0316517
(43) Date of publication of application: 28.12.2005
(73) Proprietor: Stretchline Intellectual Properties Limited, Road Town, Tortola (VG)
(72) Inventor: CAIN, Miles Stephen, Sawley, Notts NG10 3EW (GB); FINDEN, Iain Thomas Arthur, Nottingham NG8 1FL (GB)
(74) Representative: Marshall, Caroline
(86) International application number: PCT/GB2004/001125
(87) International publication number: WO 2004/082935

(56) References cited:
- EP-A- 0 251 810
- EP-A- 1 002 846
- EP-A- 1 008 310
- EP-A- 1 079 016
- WO-A-02/45698
- WO-A-91/09543
- WO-A-97/30700
- WO-A-98/09013
- GB-A- 1 171 063
- GB-A- 2 305 870
- GB-B- 2 353 248
- US-A- 4 889 576
- US-A- 5 322 727
- US-B1- 6 200 195

## Description

This invention relates to a method for manufacturing an adhesive fabric that adheres to the body.

This invention also relates to hold-up hose, in particular stockings or half-hose such as a knee-high

Narrow fabrics comprising friction-generating materials are used to attach garments and accessories onto the body. For example, in hosiery elastomeric narrow fabrics retain "stay-up" stockings in position.

This is currently achieved by forming around the internal opening of the stocking one or more annular bands of a silicone elastomer having a high coefficient of friction and a high modulus of elasticity. The bands act to hold up the stocking by applying a constrictive force, such as that generated from an elasticated ring or strap in order to maximise frictional grip.

While the above may achieve good garment positioning, it is undesirable as it can also cause discomfort and pain to the wearer. After an extended wearing period, and/or if the annular band of elastomer is a particularly tight fit, the narrow band will press into the wearer's flesh causing pain, localised temporary damage and reduced blood circulation.

According to one aspect of the invention there is provided a method for manufacturing an adhesive fabric capable of adhering to the skin of a body, comprising: a barrier layer bonded on one side of a fabric substrate and a cured adhesive silicone gel layer bonded to the barrier layer whereby the barrier prevents absorption of the adhesive silicone gel coating into the fabric substrate.

Another aspect of the invention relates to a hose having a tubular body formed from a fabric, the tubular body having at one end a leg opening, the fabric in the region of the leg opening being provided with an adhesive coating capable of adhering to the skin of a wearer.

The fabric substrate or the fabric in the region of the leg opening may be a woven, a non-woven or a knitted fabric. The knitted fabric may be knitted from non-elastomeric yarns only such as polyamide or polyester or may be knitted incorporating elastomeric yarns such as an elastane in order to provide the fabric with a desired modulus of elasticity.

The adhesive fabric may be re-usable, whereby lost adhesion is re-generated by washing the adhesive fabric in a conventional manner.

The thickness of the barrier layer is preferably chosen to be sufficient to ensure that an impervious layer is formed. Accordingly, for fabric substrates which are smooth and non-hairy, a thinner barrier layer may be adopted compared to a fabric having a rough and/or hairy surface. For fabrics having a hairy surface, it is desirable for the barrier layer to be thick enough to encapsulate therein the surface hairs in order to prevent the hairs acting as wicks.

Typically, it is envisaged that the barrier layer will have a thickness in the range of 0.05 to 0.5 mm, more preferably in the range of 0.1 to 0.3 mm, more preferably 0.15 to 0.225 mm.

In addition to permeability of the barrier layer, the thickness of the barrier layer when composed of a silicone elastomer is also chosen bearing in mind the degree of elasticity it is desired to provide to the fabric substrate, i.e. the thicker the barrier layer the greater the power of stretch recovery imparted to the fabric substrate.

The thickness of the silicone gel layer is preferably chosen to provide a desired degree of adhesion to, for example, the skin of a body. Generally, the adhesive power is a function of thickness, viz. the thicker the layer of silicone gel, the greater the adhesive power.

Typically, the thickness of the silicone gel layer is chosen to be in the range of 0.01 to 0.5 mm, more preferably 0.2 to 0.4 mm, more preferably 0.3 to 0.33 mm.

The method for manufacturing an adhesive fabric includes extruding a layer of a curable barrier material onto a fabric substrate and extruding a layer of a curable adhesive silicone gel on top of the barrier layer and curing both layers simultaneously.

Preferably the barrier layer is a silicone elastomer and the silicone gel is extruded onto the silicone elastomer before it is cured so that curing of both the silicone elastomer and gel is performed simultaneously.

Various aspects of the invention are hereinafter described with reference to the accompanying drawings, in which -
Figure 1 is a schematic perspective view of a first embodiment according to the invention;
Figure 2 is a schematic perspective view of a second embodiment according to the invention;
Figure 3 is a schematic perspective view of a third embodiment according to the invention;
Figure 4 is a schematic side view of the production of an adhesive fabric strip 10 for incorporation into the first embodiment of the invention.

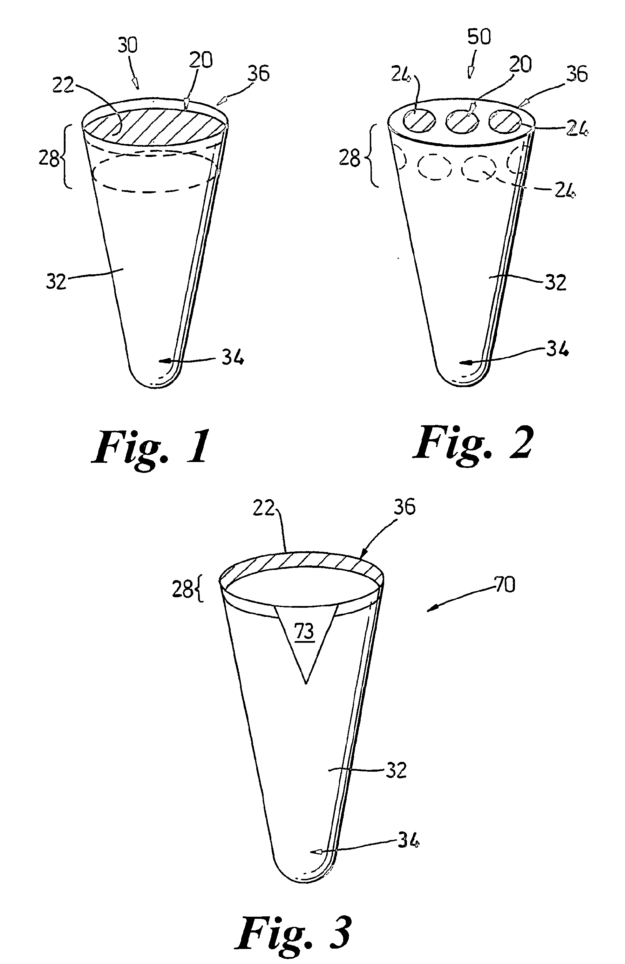

A hose 30 according to a first embodiment of the invention is illustrated in Figure 1, a hose 50 according to a second embodiment of the invention is illustrated in Figure 2 and a hose 70 according to a third embodiment of the invention is illustrated in Figure 3. Parts common to all embodiments are defined by the same reference numerals.

The hose 30 includes a tubular body 32 which is preferably closed at one end to define a first accommodating region 34. The opposite end of the tubular body 32 is open to define a leg opening 36.

On the interior of the tubular body 32 and located in the vicinity of the leg opening 36 there is provided an adhesive coating 20.

In the embodiment of Figure 1, the adhesive coating 20 is arranged to define a continuous band 22 which extends circumferentially about the leg opening 36.

In the second embodiment 50 illustrated in Figure 2, the coating 20 is arranged in a series of discrete regions 24 of adhesive; the discrete regions 24 being spaced about the circumference of the leg opening 36.

The adhesive coating is preferably formed from a pressure sensitive adhesive which preferably remains permanently tacky; in other words an adhesive which can be adhered and removed to a surface many times. Preferably the adhesive also provides an adhesive bond which is strongly resistive to shear forces but which is relatively weak to peel forces. The coating 20 may be applied so as to define a continuous layer of adhesive or alternatively a discontinuous layer of adhesive, i.e. the layer may contain small holes to thereby provide the layer with a desired degree of air permeability. In addition or alternatively, if the fabric is an open fabric such as lace, the adhesive may be applied using the technique disclosed in our European patent 0922130 such that the holes in the fabric remain open after application of the adhesive.

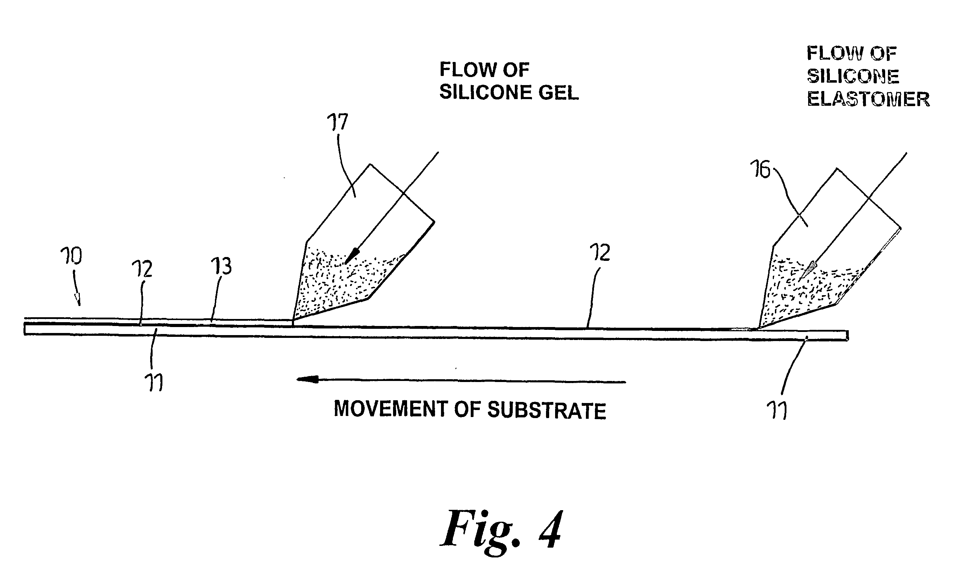

The adhesive coating 20 is defined by a silicone gel which is adhered to a fabric substrate by a barrier layer formed of a silicone elastomer (as hereinafter more fully described with reference to Figure 4).

The area of fabric coated with the adhesive coating 20 is chosen such that the desired degree of support may be achieved taking into account the resistance to shear provided by the adhesive. Typically for stockings, it is expected that the band 22 will have a width within the range of 10 to 60 mm.

Typically for knee-highs, it is expected that the band 22 will have a width within the range of 5 to 30 mm.

It is envisaged that the region of fabric 28 which carries the adhesive coating 20 and which defined the leg opening 36 may be a separate strip of fabric, such as a lace strip or a strip of plain fabric, which is attached to the remainder of the tubular body 32 for example by a seam or may be a region of fabric which is integrally formed with the remainder of the tubular body 32.

Preferably the region of fabric 28 defines a leg opening 36 which has a diameter substantially the same as, or slightly smaller than, the diameter of leg on which the hose 30, 50 is intended to be worn.

Adoption of this size of leg opening 36 provides little or no compression on the wearer's leg and thereby avoids medical problems associated with a constrictive band. With such an arrangement, support of the hose on the wearer is predominantly achieved by the adhesive contact of the adhesive coating 20 with the wearer's skin.

It is envisaged that the diameter of the leg opening 36 may be slightly greater than the diameter of the leg of the wearer. The extent to which the diameter of leg opening 16 may be greater than the leg of the wearer is determined more by the acceptability of the fit of the hose rather than the hold-up function (i.e. if the diameter is too large, folds will be created around the leg of the wearer). Such a hose is, however, within the ambit of the present invention.

Since the hold-up function is predominantly determined by the adhesive contact between the wearer's skin and coating 20, it is envisaged that fabric region 28 may simply be formed from a fabric having a sufficient degree of stretch to enable the hose to be fitted onto the leg of the wearer.

Accordingly, the fabric region 28 may be formed of a fabric having no elastomeric yarns, e.g. it may be a fabric knitted entirely of non-elastomeric yarns such as a polyamide or a polyester.

Alternatively, the fabric may incorporate elastomeric yarns in order to provide a desired amount of elastic recovery or modulus of elasticity.

In this respect, it is envisaged that using an adhesive such as silicone gel, the fabric region 28 may impart a relatively high compressive force and still provide an improve hold-up function. The utilisation of a silicone gel enables this to be achieved due to the cushioning affect of the gel (i.e. the gel spreads the compressive load of the fabric and helps reduce its constrictive effect).

This is advantageous in the production of hose since it enables a single size of hose to be worn by a wide range of differently sized wearers. In other words, the same size of hose may be worn by wearers having a leg diameter less or more than the diameter of the leg opening.

For the case where the wearer has a leg diameter greater than the diameter of the leg opening 16, the problem associated with roll over (i.e. where the end of the tubular body is caused to roll upon itself) is avoided by the adhesive contact between coating 20 and the wearer's skin.

It will be appreciated that tubular body 32 may be relatively short to define a sock.

Also, tubular body 32 may be open ended in foot region 34.

In embodiment 70 illustrated in Figure 3, the fabric of the tubular body 32 is knitted including an elastomeric yam so as to define a compressive support stocking. The fabric region 28 is a separate band of fabric, preferably elasticated, which extends only partially around the circumference of the leg opening 36.

A V-shaped gusset insert 73 formed of a non-elasticated fabric is incorporated into the upper region of the tubular body 32.

The adhesive fabric 10 suitable for use as a band for attachment to a hose for performing a hold-up function is illustrated in Figure 4 and comprises a fabric substrate 11 coated on one side with a layer of a barrier material 12 which is in turn coated with a layer of an adhesive silicone gels 13.

This construction allows for only one side of the fabric substrate to exhibit adhering properties and avoids known problems of adhesive substances undesirably seeping through to the other side of the fabric. The layer of barrier material 12 lying between the fabric substrate 11 and silicone gel layer 13 prevents the transfer of silicone gel into the fabric.

Rather than relying on frictional force alone to attach a fabric to the body, the adhesive fabric uses adhesion. By incorporating a gel having the desired level of tackiness to hold the fabric in place, the use of constrictive pressure is less significant.

The silicone gel 13 is preferably of a type known as RTV 2K GEL TP 3841^{™} or "SILOPREN" gel TP 3904 as sold by GE Bayer Silicones GmbH & Co. KG. In its mixed state its viscosity is about 7500 mPa·s. This silicone gel exhibits an appropriate degree of stickiness that allows the adhesive fabric to be easily peeled off the body without being too adhesive or not adhesive enough.

The thickness of the silicone gel layer is preferably chosen to provide a desired degree of adhesion to, for example, the skin of a body. Generally, the adhesive power is a function of thickness, viz. the thicker the layer of silicone gel, the greater the adhesive power.

Typically, the thickness of the silicone gel layer is chosen to be in the range of 0.01 to 0.5 mm, more preferably 0.2 to 0.4 mm, more preferably 0.3 to 0.33 mm.

Silicone gels are very suitable for direct use against the skin. Their soft nature encourages a cushioning effect and reduces pressure on the wearer.

Particularly in a medical environment, the use of silicone gels reduces irritation to bums, cuts and other wounds.

The gel also permits a degree of 'creep' when the fabric is adhered to the wearer i.e. slight movement of the fabric across the skin of the wearer.

Silicone gels are further capable of absorbing then slowly releasing a 'carried' solution such as antiseptic medication, vitamins and medicaments used in transdermal drug delivery.

Although not essential, the adhesive silicone gel can be sufficiently sticky to adhere to the fabric substrate when the adhesive fabric is wound around on itself. This is envisaged to be quite a useful feature when the adhesive fabric is to be used for applications other than hosiery, for example when applied to surgical bandages. With hosiery applications this level of adhesion is not necessary as the adhesive fabric does not wind on itself.

After repeated wear, the stickiness of the adhesive gel may deteriorate particularly as it attracts dust, dead skin cells and other particles. However, the adhesive qualities of the adhesive fabric can be re-generated by washing the adhesive fabric (or garment) in a conventional manner. It is estimated that the adhesive fabric can be washed up to fifty times and still retain a satisfactory and workable level of adhesion.

The barrier material 12 is preferably a silicone elastomer that is compatible with the fabric substrate for ensuring a strong bond between them. The barrier material is also preferably quick to cure thereby enabling the uncured barrier material to be extruded into the fabric substrate and cured before it penetrates too deeply into-the fabric structure. Accordingly after application and curing of the barrier material, it will not have penetrated through to the opposite surface of the fabric. In its uncured state the barrier material preferably has a viscosity of about 30,000 to 180,000 mPa·s, more preferably 50,000 to 150,000 mPa·s.

The fabric substrate 11 may be any type of knitted woven or non-woven fabric made from natural and/or man made fibres.

The fabric may be a stretch or non-stretch fabric. For stretch fabrics, the fabric may include elastomeric yarns in order to provide the fabric with enhanced stretch recovery.

With this type of fabric a combination of adhesive and friction forces may operate to attach the fabric to the body.

As indicated above with reference to Figures 1 to 3, the invention is particularly useful in the holding up of stockings. In this application the fabric substrate comprises a band of fabric at the stocking top coated internally of the stocking with at least one band of cured silicone gel 13 bonded to the fabric via the layer of barrier material 12. Holding up of the stocking is achieved primarily by the adhesion qualities of the silicone gel 13 rather than a combination of surface friction and applied constrictive force.

The band of fabric at the stocking top which defines the substrate 12 may be defined by a separately applied band of fabric, such as for example a lace band, or may be defined by part of the stocking fabric. In the case of the fabric being an open fabric such as lace having a multitude of openings, it is envisaged that the open fabric may be formed in accordance with our European patent 0922130 such that the adhesive coating does not extend over the holes in the fabric.

The thickness of the barrier layer is preferably chosen to be sufficient to ensure that an impervious layer is formed. Accordingly, for fabric substrates which are smooth and non-hairy, a thinner barrier layer may be adopted compared to a fabric having a rough and/or hairy surface. For fabrics having a hairy surface, it is desirable for the barrier layer to be thick enough to encapsulate therein the surface hairs in order to prevent the hairs acting as wicks.

The barrier layer 12 is preferably a silicone elastomer and may be chosen to be of a thickness to enhance the stretch recovery capabilities of the fabric substrate to which it is applied. Alternatively the thickness of the layer may be chosen such that they do not enhance the stretch recovery of the underlying fabric, i.e. the fabric's stretch recovery properties are not materially affected by the applied barrier layer.

Typically, it is envisaged that the barrier layer will have a thickness in the range of 0.05 to 0.5 mm, more preferably in the range of 0.1 to 0.3 mm, more preferably 0.15 to 0.225 mm.

As indicated above with reference to Figures 1 to 3, the adhesive fabric of Figure 4 is particularly suitable for use as a hold-up for hose. It is also envisaged that this adhesive fabric may be also used to provide a hold-up facility with other types of garments such as strapless bras or low cut dresses. Another particular application for the present invention is as a medical bandage wherein the fabric substrate is a knitted stretch fabric.

Figure 4 schematically illustrates the production of the adhesive fabric 10. A length of fabric substrate 11 is fed continuously from a supply (not shown) past two extrusion heads and to a take-up reel (not shown). The first head 16 extrudes the silicone elastomer to form a film of barrier 12 coating the fabric substrate.

The silicone gel is extruded onto the uncured silicone elastomer 12 and both the silicone elastomer and gel are cured simultaneously downstream of the extrusion head 17.

Preferably the silicone gel is a fast curing gel, for example has a cure time of less than 10 seconds. In its uncured state the adhesive silicone gel has a low viscosity. Without first coating the substrate with the barrier the silicone gel would penetrate through the fabric substrate. This would undesirably result in silicone gel being exposed on the uncoated side of the fabric substrate and thus undesirably render it sticky to the touch. This problem increases in proportion to the amount of silicone gel applied.

The construction of the adhesive fabric 10 avoids this problem and enables a fabric to be produced having only one adhesive side with the other side remaining unaffected by the adhesive gel irrespective of the amount of gel being applied.

As indicated above, it is envisaged that adhesive fabric according to the invention may find many uses. For example, it may be used as straps for holding in place garments or prostheses. It may also be used in lingerie to enable a garment to be held in place, e.g. a strapless bra.

It is also envisaged that fabric of the present invention may be used in applications where two pieces of the fabric are used with the intent of the gel coating of one piece of fabric adhering to the gel coating of another piece of fabric. With such an arrangement, the gel to gel bonding provides a relatively high sheer strength with a relatively low peel strength. This enables the fabric pieces to be easily separated by a peeling action and subsequently re-attached to one another. Accordingly such an arrangement could be used in a similar manner to a hook and loop type fastener (of the VELCRO® type) or any other type of application where a relatively high sheer strength and relatively low peel strength are required.

## Claims

1. A method for manufacturing an adhesive fabric including: extruding a layer of a curable barrier material onto a fabric substrate; extruding a layer of a curable adhesive silicone gel on top of the barrier layer; and curing both the barrier material and silicone gel simultaneously to form an adhesive coating.

2. The method according to Claim 1 wherein the barrier material is a silicone elastomer.

3. The method according to Claim 1 or Claim 2 wherein the silicone elastomer has a viscosity of between 50,000 and 150,000MPas in its uncured state.

4. The method according to any of Claims 1 to 3 wherein the silicone gel has a cure time of less than 10 seconds.

5. The method according to any preceding claim wherein the barrier material is extruded to form a layer having a thickness in a range of 0.05 to 0.5mm.

6. The method according to any of Claims 1 to 4 wherein the barrier material is extruded to form a layer having a thickness in a range of 0.1 to 0.3mm.

7. The method according to any of Claims 1 to 4 wherein the barrier material is extruded to form a layer having a thickness in a range of 0.15 to 0.225mm.

8. The method according to any preceding claim wherein the fabric substrate is a hose including a tubular body having a leg opening at one end, and the barrier material and silicone gel are extruded onto the tubular body and thereafter cured to form an adhesive coating on the fabric in the region of the leg opening.

9. The method according to Claim 8 wherein the barrier material and silicone gel are extruded onto the tubular body and thereafter cured to form a band of adhesive coating extending circumferentially about the leg opening.

10. The method according to Claim 9 wherein the band of adhesive coating extends continuously around the entire circumference of leg opening.

11. The method according to Claim 9 wherein the barrier material and silicone gel are extruded onto the tubular body and thereafter cured to form discrete regions of adhesive coating spaced about the circumference of the leg opening.

12. The method according to any of Claims 8 to 11 wherein the region of fabric is a separate strip of fabric and the method involves attaching the region of fabric to the remainder of the tubular body.

13. The method according to any preceding claim wherein the fabric is a knitted; woven or non-woven fabric.

14. The method according to Claim 13 wherein the fabric is a knitted fabric which is knitted from non-elastomeric yarns only.

15. The method according to Claim 13 wherein the fabric is a knitted fabric which Includes elastomeric yam to provide the fabric with a desired modulus of elasticity.

## Patentansprüche

1. Verfahren zum Herstellen eines klebenden Gewebes, umfassend: Extrudieren einer Schicht eines härtbaren Sperrschichtmaterials auf ein Gewebesubstrat; Extrudieren einer Schicht eines härtbaren klebenden Silicongels auf die Oberseite der Sperrschicht; und gleichzeitiges Härten von sowohl dem Sperrschichtmaterial als auch dem Silicongel unter Bildung einer klebenden Schicht.

2. Verfahren nach Anspruch 1, wobei das Sperrschichtmaterial ein Siliconelastomer ist.

3. Verfahren nach Anspruch 1 oder Anspruch 2, wobei das Siliconolastomer in dessen ungehärtetem Zustand eine Viskosität von zwischen 50.000 und 150.000 MPas aufweist.

4. Verfahren nach einem der Ansprüche 1 bis 3, wobei das Silicongel eine Härtungszeit von weniger als 10 s aufweist.

5. Verfahren nach einem der vorhergehenden Ansprüche, wobei das Sperrschichtmaterial derart extrudiert wird, dass eine Schicht mit einer Dicke im Bereich von 0,05 bis 0,5 mm gebildet wird.

6. Verfahren nach einem der Ansprüche 1 bis 4, wobei das Sperrschichtmaterial derart extrudiert wird, dass eine Schicht mit einer Dicke im Bereich von 0,1 bis 0,3 mm gebildet wird.

7. Verfahren nach einem der Ansprüche 1 bis 4, wobei das Sperrschichtmaterial derart extrudiert wird, dass eine Schicht mit einer Dicke im Bereich von 3,15 bis 0,225 mm gebildet wird.

8. Verfahren nach einem der vorhergehenden Ansprüche, wobei das Gewebesubstrat ein Strumpf ist, der einen schlauchförmigen Körper mit einer Beinöffnung an einem Ende umfasst, und das Sperrschichtmaterial und das Silicongel derart auf den schlauchförmigen Körper extrudiert und danach gehärtet werden, dass auf dem Gewebe im Bereich der Beinöffnung eine klebende Schicht gebildet wird.

9. Verfahren nach Anspruch 8, wobei das Sperrschichtmaterial und das Silicongcl derart auf den schlauchförmigen Körper extrudiert und danach gehärtet werden, dass ein Band einer klebenden Schicht, das sich rings um die Beinöffnung erstreckt, gebildet wird.

10. Verfahren nach Anspruch 9, wobei sich das Band einer klebenden Schicht kontinuierlich um den gesamten Umfang der Beinöffnung herum erstreckt.

11. Verfahren nach Anspruch 9, wobei das Sperrschichtmaterial und das Silicongel derart auf den schlauchförmigen Körper extrudiert und danach gehärtet werden, dass diskrete Bereiche einer klebenden Schicht, die um den Umfang der Beinöffnung in Abständen verteilt sind, gebildet werden.

12. Verfahren nach einem der Ansprüche 8 bis 11, wobei der Gewebebereich ein getrennter Gewebestreifen ist und das Verfahren das Befestigen des Gewebebereichs an dem übrigen schlauchförmigen Körper umfasst.

13. Verfahren nach einem der vorhergehenden Ansprüche, wobei das Gewebe ein gewirktes, gewebtes oder nicht-gewebtes Gewebe ist.

14. Verfahren nach Anspruch 13, wobei das Gewebe ein gewirktes Gewebe ist, das nur aus Nichtelastomergarnen gewirkt ist.

15. Verfahren nach Anspruch 13, wobei das Gewebe ein gewirktes Gewebe ist, das Elastomergarn umfasst, um dem Gewebe einen gewünschten Elastizitätsmodul zu verleihen.

## Revendications

1. Procédé de fabrication d'un tissu adhésif, comprenant : l'extrusion d'une couche d'un matériau formant barrière susceptible d'être traité sur un substrat en tissu ; l'extrusion d'une couche d'un gel de silicone susceptible d'être traité en partie supérieure de la couche barrière ; et le traitement à la fois du matériau formant barrière et du gel de silicone, simultanément, pour former un revêtement adhésif.

2. Procédé selon la revendication 1, dans lequel le matériau formant barrière est un élastomère de silicone.

3. Procédé selon la revendication 1 ou la revendication 2, dans lequel l'élastomère de silicone présente une viscosité dans la fourchette comprise entre 50.000 et 150.000 MPas à son état non traité.

4. Procédé selon l'une quelconque des revendications 1 à 3, dans lequel le gel de silicone présente un temps de traitement inférieur à 10 secondes.

5. Procédé selon l'une quelconque des revendications précédentes, dans lequel le matériau formant barrière est extrudé pour former une couche ayant une épaisseur dans une fourchette comprise entre 0,05 et 0,5 mm.

6. Procédé selon l'une quelconque des revendications 1 à 4, dans lequel le matériau formant barrière est extrudé pour former une couche ayant une épaisseur dans une fourchette comprise entre 0,1 et 0,3 mm.

7. Procédé selon l'une quelconque des revendications 1 à 4, dans lequel le matériau formant barrière est extrudé pour former une couche ayant une épaisseur dans une fourchette comprise entre 0,15 et 0,225 mm.

8. Procédé selon l'une quelconque des revendications précédentes, dans lequel le substrat de tissu est un tuyau souple comprenant un corps tubulaire ayant une ouverture pour jambe à une extrémité, et le matériau formant barrière et le gel de silicone sont extrudés sur le corps tubulaire et, ensuite, traités pour former un revêtement adhésif sur le tissu, dans la région de l'ouverture pour jambe.

9. Procédé selon la revendication 8, dans lequel le matériau formant barrière et le gel de silicone sont extrudés sur le corps tubulaire et, ensuite, traités pour former une bande de revêtement adhésif, s'étendant circonférentiellement autour de l'ouverture pour jambe.

10. Procédé selon la revendication 9, dans lequel la bande de revêtement adhésif s'étend continûment autour de la totalité de la circonférence de l'ouverture pour jambe.

11. Procédé selon la revendication 9, dans lequel le matériau formant barrière et le gel de silicone sont extrudés sur le corps tubulaire et, ensuite, traités pour former des régions discrètes de revêtement adhésif, espacées autour de la circonférence de l'ouverture pour jambe.

12. Procédé selon l'une quelconque des revendications 8 à 11, dans lequel la région de tissu est une bande séparée de tissu et le procédé implique l'attachement de la région de tissu au reste du corps tubulaire.

13. Procédé selon l'une quelconque des revendications précédentes, dans lequel le tissu est un tissu à mailles ; tissé ou non tissé.

14. Procédé selon la revendication 13, dans lequel le tissu est un tissu à mailles, tricoté à partir de fils de nature non élastomère uniquement.

15. Procédé selon la revendication 13, dans lequel le tissu est un tissu à mailles, comprenant un fil élastomère, pour donner au tissu un module d'élasticité souhaité.
